# EUROPÄISCHE PATENTSCHRIFT

(11) **EP 3 233 335 B1**
(45) Veröffentlichungstag und Bekanntmachung des Hinweises auf die Patenterteilung: **29.01.2020**
(21) Anmeldenummer: 15816140.6
(22) Anmeldetag: 16.12.2015
(51) Int. Cl.: B22F 5/00, B22F 1/00, B22F 3/02, C08L 91/06, B22F 9/04, B22F 9/06, B22F 9/08, C08K 5/20, C10M 101/02, C10M 105/68, C10M 133/16, C08K 5/10

(54) **PRESSHILFSMITTEL FÜR DIE PULVERMETALLURGIE**
PRESSING AID FOR POWDER METALLURGY
ADJUVANT DE COMPACTAGE POUR LA MÉTALLURGIE DES POUDRES

(30) Priorität: 16.12.2014 DE 102014226094; 15.12.2015 US 201514970010
(43) Veröffentlichungstag der Anmeldung: 25.10.2017
(73) Patentinhaber: GKN Sinter Metals Engineering GmbH, 42477 Radevormwald (DE)
(72) Erfinder: LINDENAU, René, 42477 Radevormwald (DE); SCHADE, Christopher, Marlton, New Jersey 08053 (US)
(74) Vertreter: Rössler, Matthias
(86) Internationale Anmeldenummer: PCT/EP2015/079985
(87) Internationale Veröffentlichungsnummer: WO 2016/096981

(56) Entgegenhaltungen:
- EP-A1- 2 366 475
- DE-A1- 10 244 486
- US-A1- 2004 254 280
- US-A1- 2013 136 926
- Geoffrey Pritchard: "Plastics Additives - Rapra market Report" In: "Plastics Additives - Rapra market Report", 1. März 2005 (2005-03-01), Rapra Technology Limited, Shawbury, Shrewsbury, Shropshire, SY4 4NR, UK, XP055116414, ISBN: 978-1-85-957499-7 Seiten 1-210, Abschnitte 4.12.4, 4.12.5; Seite 70

## Beschreibung

Die vorliegende Erfindung betrifft ein Presshilfsmittel für die Pulvermetallurgie sowie eine sinterfähige Mischung, welche das Presshilfsmittel umfasst.

Die Herstellung pulvermetallurgischer Produkte umfasst im Wesentlichen drei Teilbereiche. Zunächst werden Pulver elementarer Metalle oder von Legierungen benötigt. Diese metallischen Pulver werden dann alleine oder in Mischungen in eine entsprechende Form (Presswerkzeug) eingebracht. In dieser Form wird unter Einwirkung von Druck die spätere Bauteilform ausgebildet. Dies kann sowohl bei Raumtemperatur erfolgen (Kaltpressung) oder bei erhöhter Temperatur (Warmpressung). Der so erhaltene Pressling wird auch als Grünling bezeichnet. Dieser Grünling wird dann dem eigentlichen Sintern zugeführt. Hierbei handelt es sich um eine Wärmebehandlung, bei der die Pulverkörnchen der eingesetzten Metalle an ihren Berührungsflächen durch die Fusion der Metallatome in eine feste Verbindung gebracht werden. Dabei ist es in der Pulvermetallurgie möglich, unterschiedlichste Metallpulver als Ausgangsstoffe einzusetzen und somit die Eigenschaften der erhaltenen Produkte einzustellen.

Eine Herausforderung besteht darin, Formteile mit einer möglichst hohen Dichte herzustellen und außerdem die eingesetzten Metalle je nach Bedarf entweder gleichmäßig oder an bestimmten Bereichen in besonders hoher Konzentration in das Presswerkzeug, in dem der Grünling hergestellt wird, einzubringen.

Der Einsatz eines Presshilfsmittels ist in der Pulvermetallurgie üblich. Dies sorgt einerseits dafür, dass die Rieselfähigkeit der eingesetzten Metall- oder Metalllegierungspulver erhalten bleibt, und sich damit nach Vorgabe der Geometrie des herzustellenden Produktes im Presswerkzeug entsprechend auch in kleinere Kavitäten verteilt. Gleichzeitig muss sichergestellt sein, dass eine Entmischung nicht stattfindet, wenn unterschiedliche Pulver als Edukte eingesetzt werden. Das Presshilfsmittel darf jedoch die Eigenschaften des Endprodukts nicht beeinflussen, so dass es vor dem eigentlichen Sintervorgang unter Erwärmung aus der Mischung entfernt wird. Dies hat so zu erfolgen, dass die Form des Bauteils nicht verändert wird. Da die Presslinge beim Sintern kleinen Maßänderungen unterliegen, kann es je nach Anforderung an das fertige Bauteil notwendig sein, diese zu berücksichtigen. Hierfür werden Bauteile mit sehr engen Maßtoleranzen nach dem Sintern in separaten Werkzeugen kalibriert. Um Bauteile für extrem hohe Belastungen herzustellen, können Bauteile nach dem Sintern auch einem Schmiedeprozess bei hoher Temperatur unterzogen werden. Verglichen mit konventionellem Schmieden muss im Anschluss jedoch kein Grat entfernt werden.

Die Dichte des fertigen Formteils hängt im Wesentlichen von der erreichten Dichte des Grünlings, der sogenannten Gründichte, ab, wobei anders als beim Verpressen von keramischen Pulvern die Metallpulverpartikel aufgrund ihrer anderen geometrischen Struktur und der damit verbundenen Anzahl beweglicher Gitterbaufehler eine plastische Verformung erfahren. Aufgrund der Teilchengeometrie ist bei metallischen Pulvern, ebenfalls anders als bei keramischen Pulvern, die Gleitfähigkeit der einzelnen Pulverteilchen gegeneinander reduziert, so dass schon die lose Schüttung in der Pressform ein Porenvolumen aufweist, das beim Pressen nur unter Aufwendung sehr hoher Pressdrücke nahezu vollständig beseitigt werden kann. Hohe Pressdrücke haben jedoch einen hohen Verschleiß am Presswerkzeug beim Verdichtungsvorgang zur Folge und führen auch zu einer erhöhten Ausstoßgleitreibung des fertigen Grünlings in der Pressmatrize, so dass hier ebenfalls höhere Ausstoßkräfte mit entsprechend erhöhtem Verschleiß aufzubringen sind.

Um diese Nachteile zu vermeiden, wird in WO 2010/1105740 A1 ein Schmiermittel für die Pulvermetallurgie beschrieben, welches Carnaubawachs und wenigstens ein Fett auf pflanzlicher oder tierischer Basis umfasst. Carnaubawachs als Bestandteil eines Presshilfsmittels wird auch in WO 2008/028589 A1 beschrieben. Das dort beschriebene Presshilfsmittel umfasst weiterhin ein Amid.

Aus DE 102 44 486 A1 ist ein Presshilfsmittel bekannt, welches 20 bis 60 Gew.-%, bezogen auf die Gesamtmenge des Presshilfsmittels, eines Polyglykols und 40 bis 75 Gew.-% eines Montanwachses, ebenfalls bezogen auf die Gesamtmenge des Presshilfsmittel, umfasst.

Um eine möglichst hohe Dichte im Grünling zu erreichen, ist es daher wünschenswert, den Anteil an Presshilfsmitteln möglichst gering zu halten. Eine Verringerung der Menge an Presshilfsmitteln ist bei handelsüblichen Presshilfsmitteln verbunden mit einer Erhöhung der Reibung beim Pressvorgang und somit mit einem höheren Verschleiß der Presswerkzeuge oder mit zu hohen Reibungsverlusten, so dass die gewünschte Verdichtung nicht erreicht wird. Das Presshilfsmittel soll daher auch den aufgewandten Druck gut in das Innere des Grünlings leiten, so dass zur Herstellung im Endeffekt ein geringerer Druck notwendig ist, was einen geringeren Verschleiß in den Presswerkzeugen bedeutet.

Überraschenderweise hat sich gezeigt, dass ein Presshilfsmittel, welches wenigstens ein Amid einer Carbonsäure und Montanwachs umfasst, die Nachteile aus dem Stand der Technik vermeidet. Die der vorliegenden Erfindung zugrunde liegende Aufgabe wird daher gelöst durch ein Presshilfsmittel für die Pulvermetallurgie, welches wenigstens ein Amid einer Carbonsäure mit 18 bis 22 C-Atomen und Montanwachs umfasst.

Das erfindungsgemäße Presshilfsmittel umfasst wenigstens ein Amid einer Carbonsäure (Carbonsäureamid). Erfindungsgemäß kann das Presshilfsmittel auch Mischungen unterschiedlicher Amide derselben Carbonsäure oder Amide unterschiedlicher Carbonsäuren umfassen. Vorzugsweise wird ein Amid einer Carbonsäure eingesetzt. Das Amid kann erfindungsgemäß ein primäres, sekundäres oder tertiäres Amid sein. Bevorzugt ist das Amid ein primäres Amid.

Die zugehörige Carbonsäure ist erfindungsgemäß eine Fettsäure mit 18 bis 22 Kohlenstoffatomen. Das Carbonsäureamid (Fettsäureamid) weist erfindungsgemäß eine Säurezahl im Bereich von 0 bis 10, insbesondere von 0 bis 5 und besonders bevorzugt von 0 bis 1 auf. Die Säurezahl (SZ) ist eine chemische Größe zur Charakterisierung von sauren Bestandteilen in Fetten. Sie bezeichnet die Masse an Kaliumhydroxid (in mg), die notwendig ist, um die in 1 g Fett enthaltenen freien Fettsäuren zu neutralisieren. Die Angabe erfolgt somit in mg KOH/g Fettsäure.

Der Schmelzpunkt des erfindungsgemäßen Carbonsäureamids beträgt vorzugsweise weniger als 110 °C, insbesondere liegt er im Bereich von 50 °C bis 100 °C, besonders bevorzugt im Bereich von 65 °C bis 90 °C.

Vorzugsweise liegt die Iodzahl des Carbonsäureamids im Bereich von 50 bis 100 und beträgt vorzugsweise 95 oder weniger und 60 oder mehr. Die Iodzahl (IZ) ist eine Fettkennzahl zur Charakterisierung von Fetten und Ölen. Es ist die Menge in Gramm Iod, die formal an 100 g Fett (Fettsäure, Fettsäureamide, und vergleichbare Verbindungen) addiert werden kann.

Das Amid der Carbonsäure sorgt dafür, dass im Kern des Grünlings eine gute Schmierung vorherrscht. Weist die Carbonsäure weniger als 18 Kohlenstoffatome auf, so wird das Presshilfsmittel sehr weich. Es kommt hier zur Ausbildung von Agglomeraten an Pulvern, so dass ein homogenes Einführen in das Presswerkzeug nicht mehr möglich ist. Weist die Carbonsäure hingegen mehr als 22 Kohlenstoffatome auf, so ist das Presshilfsmittel zu hart. Ein homogenes Aufbringen auf das Metallpulver ist hier nicht mehr möglich.

Besonders bevorzugt handelt es sich bei der Carbonsäure um eine solche, welche eine ethylenische Doppelbindung umfasst. Insbesondere weist die Carbonsäure 22 Kohlenstoffatome auf. Besonders bevorzugt wird Erucasäure als Carbonsäure eingesetzt.

Insbesondere umfasst das erfindungsgemäße Presshilfsmittel mehr als 50 Gew.-% und weniger als 15 Gew.-%, insbesondere 7,5 Gew.-% bis 13 Gew.-%, besonders 10 Gew.-% des Amids der Carbonsäure. Die Gewichtsangaben beziehen sich jeweils auf ein Gesamtgewicht des Presshilfsmittels von 100 Gew.-%. Ein Anteil von 5 Gew.-% oder weniger führt dazu, dass eine schlechte interne Schmierung vorliegt. Werden mehr als 15 Gew.-% am Amid der Carbonsäure zum Presshilfsmittel zugegeben, so wird auch hier das Presshilfsmittel zu weich, wodurch ein homogenes Einbringen des mit dem Presshilfsmittel versehenen Pulvers in eine Pressform nur schwer möglich ist. Presshilfsmittel, welche insbesondere hinsichtlich der internen Schmierung als auch der Festigkeit besonders geeignet für die Pulvermetallurgie sind, weisen erfindungsgemäß zwischen 7,5 Gew.-% und 13 Gew.-% des Amids der Carbonsäure auf.

Amid der Carbonsäure, Carbonsäureamid und Fettsäureamid werden vorliegend synonym verwendet. Werden in der vorliegenden Anmeldung "Pulver" oder "Metallpulver" als Ausgangsprodukte des Sintervorgangs beschrieben, sind hier Pulver elementarer Metalle als auch Pulver von Metalllegierungen umfasst. Werden Angaben in "%" gemacht, so ist hierunter "Gew.-%" zu verstehen, soweit keine gegenteiligen Angaben vorliegen. Soweit in der vorliegenden Anmeldung Bereiche oder Zahlenbereiche angegeben werden, ist darauf hinzuweisen, dass es sich bei diesen und insbesondere bei oberen und unteren Bereichsgrenzen nicht um absolute Werte handelt. Vielmehr ist es für den angesprochenen Fachmann ersichtlich, dass der Erfolg der vorliegenden Erfindung auch bei Abweichungen von den zahlenmäßig definierten Zahlenwerten noch erreicht werden kann. Dabei kann der abweichende Bereich bis zu 5 % von den angegebenen Zahlenwerten beziehungsweise Ober- und/oder Untergrenzen differierten. Bei der Angabe von Zahlenbereichen sind auch die dazwischenliegenden Werte als offenbart anzusehen.

Erfindungsgemäß umfasst das Presshilfsmittel ein Montanwachs. Montanwachs ist ein aus bestimmten Braunkohlesorten extrahierbares natürliches Wachs. Es besteht aus einem Gemisch langkettiger Carbonsäureestern, wie zum Beispiel Estern der Montansäure. Es enthält daneben weitere Bestandteile, wie beispielsweise Montanalkohol, Harze, unverseifbare Bestandteile und Spuren von Mineralstoffen. Das gereinigte Produkt ist annähernd farblos. Vorzugsweise wird für das Presshilfsmittel der vorliegenden Erfindung ein entsprechend gereinigtes Montanwachs eingesetzt. Vorzugsweise weist das Montanwachs eine Säurezahl im Bereich von 15 bis 20 mg KOH/g auf. Der Tropfpunkt liegt bevorzugt im Bereich von 80 °C bis 90 °C.

Das erfindungsgemäße Presshilfsmittel umfasst Montanwachs bevorzugt in einem Anteil von 20 Gew.-% bis 95 Gew.-%, vorzugsweise 22,5 Gew.-% bis 87 Gew.-% und insbesondere 25 Gew.-% bis 60 Gew.-%. Das Montanwachs sorgt für eine gute Grünfestigkeit. Grünfestigkeit bedeutet, dass der hergestellte Grünling seine Form auch nach Entnahme aus dem Presswerkzeug beibehält. Montanwachs weist gegenüber dem im Stand der Technik beschriebenen Carnaubawachs eine verbesserte Grünfestigkeit sowie verbesserte Schmiereigenschaften auf. Diese ermöglichen erneut, dass mit einem geringeren Pressdruck gearbeitet werden kann, wodurch der Verschleiß am Presswerkzeug verringert werden kann. Zudem sind die Reibungskräfte, die am Stempel (Matrize) und am Dorn des Presswerkzeugs auftreten, geringer, wodurch ebenfalls ein geringerer Verschleiß zu beobachten ist.

Überraschenderweise hat sich gezeigt, dass ein Teil des Montanwachses durch ein Amidwachs ersetzt werden kann, ohne dass die Grünfestigkeit oder die Schmiereigenschaften des Presshilfsmittels, welche durch das Montanwachs erreicht werden, negativ beeinflusst werden. In einer bevorzugten Ausführungsform umfasst das erfindungsgemäße Presshilfsmittel daher neben dem Amid einer Carbonsäure und einem Montanwachs weiterhin ein Amidwachs.

Wachse sind Stoffe, die durch ihre mechanisch-physikalischen Eigenschaften definiert werden. Ein Stoff wird erfindungsgemäß als Wachs bezeichnet, wenn er bei 20 °C knetbar, fest bis brüchig hart ist, eine grobe bis feinkristalline Struktur aufweist, farblich durchscheinend bis opak, aber nicht glasartig ist, über 40 °C ohne Zersetzung schmilzt, wenig oberhalb des Schmelzpunktes leicht flüssig (wenig viskos) ist, eine stark temperaturabhängige Konsistenz und Löslichkeit aufweist sowie unter leichtem Druck polierbar ist. Ist mehr als eine der oben aufgeführten Eigenschaften nicht erfüllt, ist der Stoff nach dieser Definition der Deutschen Gesellschaft für Fettwissenschaft [DGF-Einheitsmethode M-I 1 (75)] kein Wachs.

Das Amidwachs der vorliegenden Erfindung ist ein entsprechendes Wachs, welches auf einem Amid einer langkettigen Carbonsäure basiert.

Erfindungsgemäß kann das Amid ein primäres und/oder ein sekundäres und/oder tertiäres Amid umfassen. Erfindungsgemäß können somit unterschiedliche Amide eingesetzt werden. Bevorzugt weist das Amidwachs eine Säurezahl von 0 bis 10 mg KOH/g, insbesondere von 0 bis 7 mg KOH/g auf. Der Schmelzpunkt beträgt vorzugsweise mehr als 100 °C und 160 °C oder weniger. Insbesondere bevorzugt liegt der Schmelzpunkt im Bereich von 110 °C bis 155 °C, vor allem im Bereich von 130 °C bis 155 °C.

Bevorzugt ist das Amidwachs ein sekundäres Amid. Besonders bevorzugt ist es ein Amid, insbesondere ein sekundäres Amid, einer Carbonsäure mit 28 bis 45 Kohlenstoffatomen. Die Carbonsäure kann linear oder verzweigt, gesättigt, einfach oder mehrfach ungesättigt sein; bevorzugt ist es eine lineare verzweigte Carbonsäure. Insbesondere ist eine Carbonsäure bevorzugt, welche 35 bis 40 Kohlenstoffatome umfasst. Besonders bevorzugt ist das Amidwachs Distearylethylendiamid.

Der Anteil des Amidwachses am erfindungsgemäßen Presshilfsmittel beträgt vorzugsweise 75 Gew.-% oder weniger, bezogen auf das Gesamtgewicht des Presshilfsmittels, welches mit 100 Gew.-% anzusehen ist. Bevorzugt umfasst das Presshilfsmittel 20 Gew.-% bis 70 Gew.-%, insbesondere 40 Gew.-% bis 65 Gew.-% des Amidwachses.

Durch den Ersatz des Montanwachses durch das gegenüber des Montanwachses preiswerteren Amidwachs kann ein kostengünstiges Presshilfsmittel bereitgestellt werden, das dennoch dieselben Eigenschaften hinsichtlich Grünfestigkeit und Schmiereigenschaften aufweist, wie ein Presshilfsmittel, das ein Carbonsäureamid und Montanwachs umfasst.

In einer bevorzugten Ausführungsform besteht das erfindungsgemäße Presshilfsmittel aus einem Carbonsäureamid, einem Montanwachs und einem Amidwachs.

In einer weiteren Ausführungsform betrifft die vorliegende Erfindung ein Verfahren zur Herstellung eines erfindungsgemäßen Presshilfsmittels. Erfindungsgemäß werden vorzugsweise das Carbonsäureamid und Montanwachs miteinander verschmolzen. Weiter bevorzugt ist vorgesehen, dass die erhaltene und abgekühlte Schmelze gemahlen wird. Das hieraus erhaltene Produkt kann so in der Pulvermetallurgie eingesetzt werden.

Umfasst das erfindungsgemäße Presshilfsmittel neben dem Carbonsäureamid und dem Montanwachs auch weiterhin ein Amidwachs, so werden erfindungsgemäß vorzugsweise zunächst das Carbonsäureamid und das Montanwachs miteinander verschmolzen, die erhaltene Schmelze abgekühlt und nach dem Abkühlen gemahlen. Die hierbei erhaltenen Teilchen werden dann zusammen mit dem kleinteiligen Amidwachs in einer geeigneten Mühle vermahlen.

Alternativ ist es auch möglich, dass Carbonsäureamid, Montanwachs und gegebenenfalls das Amidwachs miteinander verschmolzen werden und die erhaltene Schmelze anschließend verdüst wird. Es ist jedoch bevorzugt, dass nur Carbonsäureamid und Montanwachs miteinander verschmolzen und danach in festem Zustand mit dem Amidwachs vermahlen werden, da hierfür ein geringerer Energiebedarf besteht, als beim Schmelzen des Amidwachses notwendig ist.

Wird eine Schmelze, welche das Carbonsäureamid und das Montanwachs und gegebenenfalls das Amidwachs umfasst, verdüst oder gemahlenen, so weist das erhaltene Produkt vorzugsweise eine Korngrößenverteilung von x₁₀ 5 bis 15 µm, x₅₀ 20 bis 35 µm, x₉₀ 35 bis 50 µm und x₉₉ <70 µm auf. Die Analyse erfolgt mit einem QICPIC der Firma SympaTec GmbH. Dabei bedeutet x₁₀, dass 10 % der Teilchen eine Größe im Bereich von 5 bis 15 µm aufweisen, x₅₀, dass 50 % der Teilchen im Größenbereich von 20 bis 35 µm liegen, x₉₀, dass 90 % der Teilchen im Größenbereich von 35 bis 50 µm liegen und entsprechend x₉₉, dass 99 % der Teilchen eine Größe von weniger als 70 µm aufweisen.

In einer weiteren Ausführungsform betrifft die vorliegende Erfindung die Verwendung des erfindungsgemäßen Presshilfsmittels in der Pulvermetallurgie. Das erfindungsgemäße Presshilfsmittel für die Pulvermetallurgie wird vorzugsweise zur Herstellung von gesinterten Formteilen verwendet. Als sinterbare Formteile im Sinne der vorliegenden Erfindung werden Formteile verstanden, welche vollständig aus einem sinterfähigen Material hergestellt wurden, andererseits werden hierunter auch Verbundteile verstanden, wobei der Grundkörper eines derartigen Verbundteils beispielsweise aus einer aluminium- oder eisenhaltigen Mischung hergestellt sein kann, und der mit dem Grundkörper weiter verbundene Körper aus einem weiteren Material, beispielsweise Gussstahl, gesintert oder massiv, oder aus massivem Aluguss hergestellt sein kann. Umgekehrt kann das Verbundteil auch beispielsweise lediglich auf den Stirnseiten oder seiner Oberfläche eine gesinterte Schicht aufweisen, wohingegen der Grundkörper aus beispielsweise Stahl oder Gusseisen, gesintert oder massiv, hergestellt ist. Die gesinterten Formteile können dabei vorzugsweise unter Einsatz des erfindungsgemäßen Schmiermittels kalibriert und/oder des Weiteren in der Wärme ausgehärtet sein. Gesinterte Formteile im Sinne der vorliegenden Erfindung sind insbesondere solche Formteile, welche nach dem Sintern eine Dichte von 7,2 g/cm³ oder mehr aufweisen, wie beispielsweise Pumpenteile oder Getriebeteile wie Synchronkörper. Diese Formteile benötigen auf Grund der hohen Beanspruchung in der weiteren Verwendung eine hohe Dichte. Die Herstellung ist daher eine große Herausforderung, welche mit dem erfindungsgemäßen Presshilfsmittel gelöst wurde.

Das erfindungsgemäße Presshilfsmittel kann dabei sowohl beim Kaltpressen als auch beim Warmpressen eingesetzt werden. Beim Kaltpressen erfolgt der Pressvorgang bei Raumtemperatur. Beim Warmpressen wird die Matrize erwärmt. Überraschenderweise hat sich gezeigt, dass das erfindungsgemäße Presshilfsmittel beim Warmpressen besonders gute Eigenschaften im Hinblick auf Grünfestigkeit und Schmiereigenschaften und somit auch Verschleißschutz aufweist. Besonders bevorzugt wird daher das erfindungsgemäße Presshilfsmittel beim Warmpressen bei einer Matrizen-Temperatur im Bereich von 25 °C bis 100 °C, insbesondere von 35 °C bis 90 °C, bevorzugt von 40 °C bis 75 °C, besonders von 50 °C bis 65 °C verwendet.

Die sinterbaren Formteile sind vorzugsweise aus einer Mischung, umfassend mindestens ein metallisches Material und/oder Kunststoffmaterial, als auch mindestens ein erfindungsgemäßes Schmiermittel für die Pulvermetallurgie, hergestellt. Sinterfähige metallische und/oder Kunststoffmaterialen im Sinne der vorliegenden Erfindung sind insbesondere Pulver beziehungsweise Pulvermischungen aus metallischen, keramischen und/oder Kunststoffbestandteilen beispielsweise aus niedrig legierten Stählen, Chrom-Nickel-Stählen, Bronzen, Nickelbasislegierungen wie Hastalloy, Inconel, Metalloxiden, Metallnitriden, Metallsiliziden oder dergleichen, weiterhin aluminiumhaltige Pulver beziehungsweise Mischungen, wobei die Mischungen auch hochschmelzende Bestandteile enthalten können wie beispielsweise Platin oder dergleichen. Die eingesetzten Pulver und deren Teilchengrößen sind vom jeweiligen Einsatzzweck abhängig. Beispielhafte eisenhaltige Pulver sind die Legierungen 316L, 304L, Incone1600, Incone1625, Monel und HastalloyB, X und C als auch 17-4PH. Besonders bevorzugt sind niedrig legierte Stahlpulver wie Eisen-Kohlenstoff-Stähle, Distaloy AB, AE, DE und HP (Höganäs AB Schweden) und Ancorsteel 4300 (Hoeganaes Corp., USA). Auch Titan und/oder Titanlegierungen sind geeignete Materialien, auch in Mischung mit anderen Materialien, insbesondere eisenhaltigen Pulvern. Weiterhin kann das metallische Material und/oder Kunststoffmaterial ganz oder teilweise aus Kunststofffasern beziehungsweise Fasern sein, vorzugsweise Fasern mit Durchmessern zwischen etwa 0,1 µm bis etwa 2 µm und einer Länge von wenigen Mikrometern bis hin zu etwa 50 Millimetern. Zusätzlich können den metallischen Materialen und/oder Kunststoffmaterialien auch insbesondere noch Kohlenstoff zur Bildung gewünschter Legierungen in entsprechender Menge zugesetzt werden, sowie sonstige Additive wie beispielsweise Bindemittel oder Ähnliches.

Die der vorliegenden Erfindung zugrundeliegende Aufgabe wird weiterhin gelöst durch eine Mischung zur Herstellung von gesinterten Formteilen. Diese erfindungsgemäße Mischung umfasst wenigsten ein pulverförmiges Metall und/oder eine pulverförmige Legierung sowie ein Presshilfsmittel gemäß der vorliegenden Erfindung. Überraschenderweise hat sich gezeigt, dass ein Anteil von 0,1 Gew.-% bis 2,0 Gew.-% des Presshilfsmittels, bezogen auf das Gesamtgewicht der Mischung, ausreichend ist, um eine sinterfähige Mischung zu erhalten, in der innerhalb des Grünlings eine ausreichende Grünfestigkeit sowie ein ausreichender Druck erreicht wird. Überraschenderweise hat sich gezeigt, dass die Konzentration an Presshilfsmittel gegenüber im Stand der Technik beschriebenen reinen Amidwachsen um 0,2 Gew.-% reduziert werden kann, ohne dass dies negativen Einfluss auf das Verfahren oder das erhaltene Produkt hat. Alternativ kann bei gleicher Menge an eingesetztem Presshilfsmittel ein höherer Druck und damit eine höhere Dichte im Grünling erreicht werden.

Erfindungsgemäß kann das Presshilfsmittel auf das Metallpulver beziehungsweise das Legierungspulver elementar oder über Sprühen aufgebracht werden. Insbesondere der Auftrag über Sprühen ist vorteilhaft, da hier eventuell entstehende Stäube verhindert werden können.

Die Mischung zur Herstellung von gesinterten Formteilen kann erfindungsgemäß weitere im Stand der Technik bekannte Zusatzmittel, wie beispielsweise Aerosile, Graphit, selbstschmierende Materialien oder Bindemittel umfassen. Insbesondere kann der Mischung noch Kohlenstoff zur Bildung gewünschter Legierungen in entsprechender Menge zugesetzt werden, sowie weitere dem Fachmann bekannte Additive wie beispielsweise Bindemittel oder Ähnliches. Des Weiteren kann die sinterfähige Mischung auch mindestens ein Stabilisierungsmittel und/oder mindestens ein Antiagglomerationsmittel umfassen. Weiterhin kann die sinterfähige Mischung auch selbstschmierende Mittel umfassen, neben Graphit beispielsweise alternativ oder zusätzlich MoS₂, WS₂, BN und/oder andere Kohlenstoffmodifikationen wie Koks, polarisierter Graphit oder Ähnliches. Des Weiteren kann die sinterfähige Mischung auch Aerosile sowie sonstige, dem Fachmann bekannte Zusätze, je nach Anwendungszweck ausgewählt, umfassen.

Die vorliegende Erfindung betrifft weiterhin ein Verfahren zur Herstellung der erfindungsgemäßen Mischung, wobei
- in einem ersten Schritt das von dem Presshilfsmittel umfasste mindestens eine Carbonsäureamid und Montanwachs zusammen geschmolzen werden; und
- in einem zweiten Schritt das gemäß dem ersten Schritt hergestellte Presshilfsmittel dem metallischen Material zugesetzt wird.

Weiter bevorzugt ist vorgesehen, dass nach dem ersten Schritt des erfindungsgemäßen Verfahrens die erhaltene Schmelze verdüst oder nach Abkühlen die abgekühlte Schmelze gemahlen wird.

Überraschenderweise hat sich gezeigt, dass bei dem erfindungsgemäßen Verfahren Pressdichten, sei es durch uniaxiales, biaxiales oder isostatisches Pressen, der mit der erfindungsgemäßen Mischung hergestellten Grünkörper erhalten werden, welche deutlich oberhalb denjenigen liegen, welche üblicherweise mit dem aus dem Stand der Technik bekannten Presshilfsmitteln erzielbar sind.

Alternativ ist ein Verfahren zur Herstellung der erfindungsgemäßen Mischung vorgesehen, gemäß welchem
- in einem ersten Schritt das vom Presshilfsmittel umfasste mindestens eine Carbonsäureamid und Montanwachs zusammen geschmolzen, anschließend mit dem Amidwachs miteinander vermischt oder gemahlen werden; und
- in einem zweiten Schritt das gemäß dem ersten Schritt hergestellte Presshilfsmittel dem metallischen Material zugesetzt wird.

Auch mittels dieses alternativen Verfahrens sind nach dem metallurgischen Pressvorgang erhaltene Grünkörper mit hohen Pressdichten und entsprechend auch hohen Grünfestigkeiten erzielbar.

Die der vorliegenden Erfindung zu Grunde liegende Aufgabe wird weiterhin gelöst durch ein Sinterverfahren zur Herstellung eines Bauteils insbesondere mit einer Dichte von 7,2 g/cm³ oder mehr unter Einsatz des zuvor beschriebenen Presshilfsmittels, sowie durch ein mit Hilfe dieses Verfahrens erhaltenes Bauteil. Bei dem Bauteil handelt es sich vorzugsweise um Pumpenteile und/oder Getriebeteile, wie beispielsweise Synchronkörper, mit einer Dichte von 7,2 g/cm³ oder mehr.

Die Vorteile der vorliegenden Erfindung werden anhand des folgenden Beispiels näher erläutert.

### Ausführungsbeispiel:

Ein erfindungsgemäßes Presshilfsmittel, welches 10 Gew.-% eines Amids der Erucasäure (Crodamide® ER der Firma Croda Chemicals Europe Ltd, UK), 30 Gew.-% Montanwachs (Waradur® der Firma Völpker Spezialprodukte GmbH, Völpke, Deutschland) und 60 Gew.-% eines Amidwachses (Distearylethylendiamid, vertrieben unter dem Namen Crodamide® EBS von der Firma Croda Chemicals Europe Ltd, UK) umfasste, wurde als Presshilfsmittel eingesetzt. Die Mischung zur Herstellung von gesinterten Formteilen umfasste Eisen als Metallpulver, weiterhin 2 Gew.-% Kupfer, 0,6 Gew.-% Graphit sowie 0,6 Gew.-% des erfindungsgemäßen Presshilfsmittels. Das Gesamtgewicht betrug 100 Gew.-%.

Das erfindungsgemäße Presshilfsmittel bestand aus 10 Gew.-% Eurcasäureamid, 30 Gew.-% Montanwachs und 60 Gew.-% Amidwachs. Das Carbonsäureamid und das Montanwachs wurden miteinander verschmolzen, nach dem Abkühlen in Schuppen zerkleinert und diese dann mit dem Amidwachs vermahlen. Schuppen im Sinne der vorliegenden Anmeldung sind kleine Teilchen, welche eine überwiegend 2-dimensionale Ausdehnung haben. Die Dicke beträgt nur wenige Nanometer bis hin zu 1 µm. Die flächige Ausdehnung kann beliebige regelmäßige oder unregelmäßige Formen annehmen. Ausgehend von einer annähernd runden Form, beträgt der Durchmesser weniger als 70 µm. Ausgehend von einer ovalen Form, beträgt die Länge der längsten Achse weniger als 70 µm.

Als Vergleich wurde eine Mischung hergestellt, die ebenfalls Eisen als Metallpulver, 2 Gew.-% Kupfer, 0,6 Gew.-% Graphit sowie 0,6 Gew.-% eines aus dem Stand der Technik bekannten Presshilfsmittels, nämlich eines unter dem Handelsnamen "Licowachs® C" von der Firma Clariant, Deutschland, vertriebenen Amidwachses, enthielt. Auch hier betrug das Gesamtgewicht 100 Gew.-%.

Die Pulvermischung wurde jeweils mit dem Presshilfsmittel homogen vermischt. Die solchermaßen hergestellten sinterfähigen Pulvermischungen wurden in ein übliches Presswerkzeug gefüllt und bei unterschiedlichen Drücken gepresst. Es wurden bei unterschiedlichen Pressdrücken die Dichten der hergestellten Grünkörper sowohl bei Einsatz des erfindungsgemäßen Presshilfsmittels als auch bei Einsatz eines aus dem Stand der Technik bekannten Amidwachses in Übereinstimmung mit DIN ISO 3369 ermittelt.

Sinterfähige Mischungen, wie zuvor beschrieben, wurden mit einem Pressdruck von 700 MPa komprimiert. Die hieraus erhaltenen Werte sind in der nachfolgenden Tabelle 1 gezeigt. Wie aus dieser hervorgeht, ist bei gleichem Pressdruck, nämlich 700 MPa, der Druck, der im Inneren des Grünlings anliegt, bei dem erfindungsgemäßen Presshilfsmittel deutlich höher als bei der Verwendung eines aus dem Stand der Technik bekannten Presshilfsmittels. Während mit einem bekannten Presshilfsmittel lediglich ein Druck von 276 MPa im Inneren des Grünlings festgestellt werden kann, beträgt dieser bei Verwendung eines erfindungsgemäßen Presshilfsmittels 483 MPa.

Um eine gleiche Verdichtung zu erreichen, ist somit beim Einsatz eines erfindungsgemäßen Presshilfsmittels ein deutlich geringerer Druck notwendig, so dass hierdurch ein geringerer Verschleiß in den Werkzeugen erzielt werden kann. Dies zeigt sich auch daran, dass die an der Matrize (Stempel) und dem Dorn wirkenden Reibungskräfte geringer sind, als bei Verwendung eines handelsüblichen Presshilfsmittels. Zudem ist auch der Ausstoßdruck, mit welchem der Grünling aus der Passform herausgebracht werden muss bei Verwendung des erfindungsgemäßen Presshilfsmittels deutlich geringer, als bei Verwendung eines im Stand der Technik bekannten Presshilfsmittels. Bei Verwendung des gleichen Druckes erhält man bei Verwendung des erfindungsgemäßen Presshilfsmittels ein Formteil mit einer Dichte, welche deutlich über der Dichte solcher Teile liegt, die mit einem aus dem Stand der Technik bekannten Presshilfsmittel hergestellt wurden.

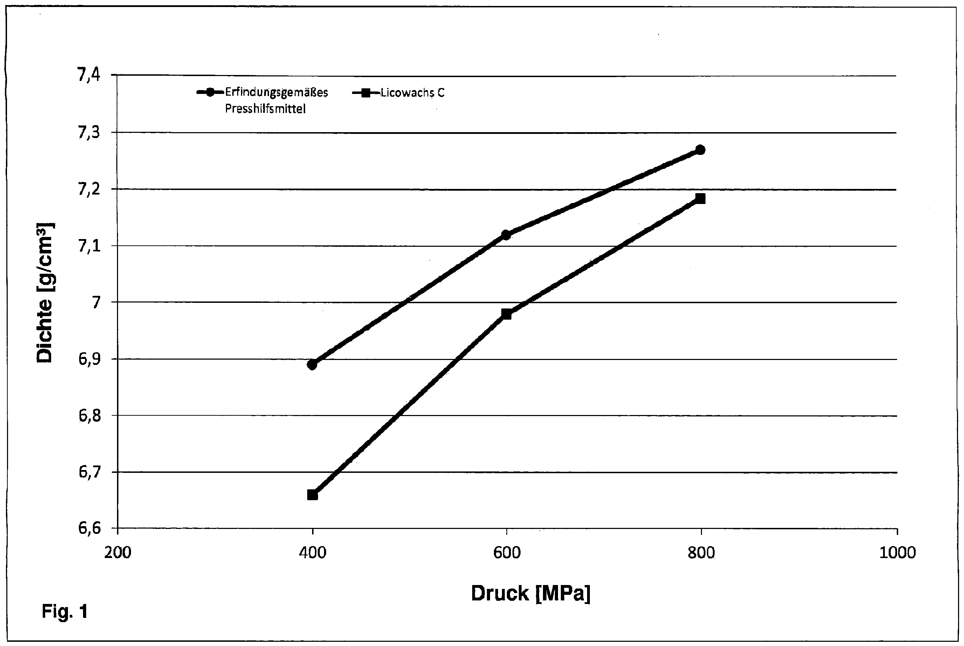

Dies ist auch nochmals aus der als Figur 1 beigefügten Graphik zu erkennen. Hier wurden wie weiter oben beschrieben zwei Pulvermischungen mit einem erfindungsgemäßen Presshilfsmittel und einem aus dem Stand der Technik bekannten Presshilfsmittel (Licowachs® C) unterschiedlichen Pressdrücken, nämlich 400 MPa, 600 MPa, und 800 MPa ausgesetzt und die erhaltene Dichte gemessen. Auch hier zeigt sich, dass bei gleichem Pressdruck und gleicher Menge an eingesetztem Presshilfsmittel eine höhere Gründichte erreicht werden kann.

**Tabelle 1:**

| Material | | | Pressdruck | Interner Druck | Reibkraft am Stempel | Reibkraft am Dorn | Ausstoßdruck | Dichte |
|---|---|---|---|---|---|---|---|---|
| Fe+2 % Cu+ 0,6 % Graphit + 0,6 % Schmiermittel | Fließzeit [sec] | Dichte vor Pressung [g/cm³] | MPa | MPa | kN | kN | MPa | g/cm³ |
| Licowachs ® C | 29,61 | 2,87 | 700 | 276 | 24,71 | 17,11 | 244 | 7,10 |
| Erfindungsgemäßes Presshilfsmittel | 29,58 | 2,95 | 700 | 483 | 14,34 | 11,35 | 135 | 7,21 |

## Patentansprüche

1. Presshilfsmittel für die Pulvermetallurgie umfassend wenigstens ein Amid einer Carbonsäure mit 18 bis 22 C-Atomen und Montanwachs.

2. Presshilfsmittel nach Anspruch 1, weiterhin umfassend wenigstens ein Amidwachs.

3. Presshilfsmittel nach Anspruch 1 oder 2, **dadurch gekennzeichnet, dass** das Amid der Carbonsäure ein primäres, sekundäres und/oder tertiäres Amid ist.

4. Presshilfsmittel nach einem der Ansprüche 1 bis 3, **dadurch gekennzeichnet, dass** das Amid der Carbonsäure ein Amid der Erucasäure ist.

5. Presshilfsmittel nach einem der Ansprüche 1 bis 4, **dadurch gekennzeichnet, dass** das Amidwachs ein primäres, sekundäres und/oder tertiäres Amid umfasst.

6. Presshilfsmittel nach einem der Ansprüche 1 bis 5, **dadurch gekennzeichnet, dass** der Anteil an Amid der Carbonsäure mehr als 5 Gew.-% und weniger als 15 Gew.-%, insbesondere von 7,5 Gew.-% bis 13 Gew.-%, besonders 10 Gew.-%, bezogen auf das Gesamtgewicht des Presshilfsmittels beträgt.

7. Presshilfsmittel nach einem der Ansprüche 1 bis 6, **dadurch gekennzeichnet, dass** der Anteil von Montanwachs 20 Gew.-% bis 95 Gew.-%, insbesondere 22,5 Gew.-% bis 87 Gew.-%, besonders 25 Gew.-% bis 60 Gew.-% beträgt, bezogen auf das Gesamtgewicht des Presshilfsmittels.

8. Presshilfsmittel nach einem der Ansprüche 2 bis 6, **dadurch gekennzeichnet, dass** der Anteil an Amidwachs 75 Gew.-% oder weniger, insbesondere 20 Gew.-% bis 70 Gew.-%, besonders 40 Gew.-% bis 65 Gew.-% beträgt, bezogen auf das Gesamtgewicht des Presshilfsmittels.

9. Mischung zur Herstellung von gesinterten Formteilen umfassend wenigstens ein pulverförmiges Metall und/oder eine pulverförmige Metalllegierung sowie ein Presshilfsmittel gemäß einem der Ansprüche 1 bis 8.

10. Mischung gemäß Anspruch 9, **dadurch gekennzeichnet, dass** diese 0,1 Gew.-% bis 2,0 Gew.-% Presshilfsmittel umfasst, bezogen auf das Gesamtgewicht der Mischung.

11. Verfahren zur Herstellung einer Mischung gemäß Anspruch 9 oder 10, **dadurch gekennzeichnet, dass** das Presshilfsmittel dem pulverförmiges Metall und/oder der pulverförmigen Metalllegierung elementar oder über Sprühen zugegeben wird.

## Claims

1. Compacting auxiliary for powder metallurgy, comprising at least one amide of a carboxylic acid with 18 to 22 C atoms and montan wax.

2. Compacting auxiliary according to Claim 1, further comprising at least one amide wax.

3. Compacting auxiliary according to Claim 1 or 2, **characterized in that** the amide of a carboxylic acid is a primary, secondary and/or tertiary amide.

4. Compacting auxiliary according to one of Claims 1 to 3, **characterized in that** the amide of a carboxylic acid is an amide of erucic acid.

5. Compacting auxiliary according to one of Claims 1 to 4, **characterized in that** the amide wax comprises a primary, secondary and/or tertiary amide.

6. Compacting auxiliary according to one of Claims 1 to 5, **characterized in that** the amount of an amide of the carboxylic acid is more than 5 wt% and less than 15 wt%, preferably from 7.5 wt% to 13 wt%, particularly 10 wt%, based on the total weight of the compacting auxiliary.

7. Compacting auxiliary according to one of Claims 1 to 6, **characterized in that** the amount of montan wax is 20 wt% to 95 wt%, preferably 22.5 wt% to 87 wt%, particularly 25 wt% to 60 wt%, based on the total weight of the compacting auxiliary.

8. Compacting auxiliary according to one of Claims 2 to 6, **characterized in that** the amount of amide wax is 75 wt% or less, preferably 20 wt% to 70 wt%, particularly 40 wt% to 65 wt%, based on the total weight of the compacting auxiliary.

9. Mixture for the production of sintered moulded parts comprising at least one powdery metal and/or a powdery metal alloy and a compacting auxiliary according to one of Claims 1 to 8.

10. Mixture according to Claim 9, **characterized by** containing 0.1 wt% to 2.0 wt% of compacting auxiliary, based on the total weight of the mixture.

11. Method for producing a mixture according to Claim 9 or 10, **characterized in that** the compacting auxiliary is added to the powdery metal and/or the powdery metal alloy in elemental form or by spraying.

## Revendications

1. Adjuvant de compactage pour la métallurgie des poudres comprenant au moins un amide d'un acide carboxylique comportant 18 à 22 atomes de C et de la cire de lignite.

2. Adjuvant de compactage selon la revendication 1, comprenant en outre au moins une cire d'amide.

3. Adjuvant de compactage selon la revendication 1 ou 2, **caractérisé en ce que** l'amide de l'acide carboxylique est un amide primaire, un amide secondaire et/ou un amide tertiaire.

4. Adjuvant de compactage selon l'une quelconque des revendications 1 à 3, **caractérisé en ce que** l'amide de l'acide carboxylique est un amide de l'acide érucique.

5. Adjuvant de compactage selon l'une quelconque des revendications 1 à 4, **caractérisé en ce que** la cire d'amide comprend un amide primaire, un amide secondaire et/ou un amide tertiaire.

6. Adjuvant de compactage selon l'une quelconque des revendications 1 à 5, **caractérisé en ce que** la proportion en amide de l'acide carboxylique est supérieure à 5 % en poids et inférieure à 15 % en poids, en particulier est comprise entre 7,5 % en poids et 13 % en poids, particulièrement vaut 10 % en poids par rapport au poids total de l'adjuvant de compactage.

7. Adjuvant de compactage selon l'une quelconque des revendications 1 à 6, **caractérisé en ce que** la proportion de cire de lignite est de 20 % en poids à 95 % poids, en particulier de 22,5 % en poids à 87 % poids, particulièrement de 25 % en poids à 60 % en poids, par rapport au poids total de l'adjuvant de compactage.

8. Adjuvant de compactage selon l'une quelconque des revendications 2 à 6, **caractérisé en ce que** la proportion de cire d'amide est de 75 % en poids ou moins, en particulier de 20 % en poids à 70 % en poids, particulièrement de 40 % en poids à 65 % en poids, par rapport au poids total de l'adjuvant de compactage.

9. Mélange pour la préparation de pièces moulées frittées comprenant au moins un métal sous forme de poudre et/ou un alliage métallique sous forme de poudre ainsi qu'un adjuvant de compactage selon l'une quelconque des revendications 1 à 8.

10. Mélange selon la revendication 9, **caractérisé en ce que** celui-ci comprend 0,1 % en poids à 2,0 % en poids d'adjuvant de compactage, par rapport au poids total du mélange.

11. Procédé pour la préparation d'un mélange selon la revendication 9 ou 10, **caractérisé en ce que** l'adjuvant de compactage est ajouté de manière élémentaire ou par pulvérisation au métal sous forme de poudre et/ou à l'alliage métallique sous forme de poudre.
